# EUROPÄISCHE PATENTSCHRIFT

(11) **EP 2 048 732 B1**
(45) Veröffentlichungstag und Bekanntmachung des Hinweises auf die Patenterteilung: **30.11.2011**
(21) Anmeldenummer: 08017375.0
(22) Anmeldetag: 02.10.2008
(51) Int. Cl.: H01M 8/10, H01M 8/04, H01M 12/08, H01M 8/06

(54) **Brennstoffzelle und Verfahren zum Herstellen einer Brennstoffzelle**
Fuel cell and method for producing same
Pile à combustible et procédé de fabrication d'une pile à combustible

(30) Priorität: 10.10.2007 DE 102007048807
(43) Veröffentlichungstag der Anmeldung: 15.04.2009
(60) Teilanmeldung: 11002373.6
(73) Patentinhaber: Micronas GmbH, 79108 Freiburg (DE)
(72) Erfinder: Lehmann, Mirko, 9642 Ebnat-Kappel (CH); Müller, Claas, 79104 Freiburg (DE); Reinecke, Holger, 79312 Emmendingen (DE); Frank, Mirko, 79098 Freiburg (DE); Erdler, Gilbert, 79100 Freiburg (DE)
(74) Vertreter: Koch Müller Patentanwaltsgesellschaft mbH

(56) Entgegenhaltungen:
- DE-A1-102004 011 554
- US-A1- 2002 106 541
- US-A1- 2006 088 739
- ERDLER G ET AL: "Chip integrated fuel cell" SENSORS AND ACTUATORS A, ELSEVIER SEQUOIA S.A., LAUSANNE, CH, Bd. 132, Nr. 1, 8. November 2006 (2006-11-08), Seiten 331-336, XP025081953 ISSN: 0924-4247 [gefunden am 2006-11-08]

## Beschreibung

Die Erfindung bezieht sich auf eine Brennstoffzelle mit den oberbegrifflichen Merkmalen gemäß Patentanspruch 1 bzw. auf ein Verfahren zum Herstellen einer derartigen Brennstoffzelle.

Zunehmend soll eine Erfassung von Messwerten an schwer zugänglichen oder mobilen Orten von autonomen Mikrosystemen übernommen werden. Derartige Mikrosysteme bestehen beispielsweise aus Sensoren, Aktoren, einer Signalverarbeitungseinrichtung und einer Energieversorgung, welche untereinander verschaltet sind. Zum Ausgeben verarbeiteter Messwerte weisen solche Mikrosysteme vorzugsweise auch eine Sendeeinheit oder sonstige Schnittstelle zur Datenausgabe auf. Bisherige Entwicklungen in derartigen Themengebieten zeigen große Fortschritte bei Entwicklungen der Sensorik und der Aktorik in Bezug auf Miniaturisierungsfähigkeit und mit Blick auf eine Leistungsreduzierung. Bezüglich der Energieversorgung wurden jedoch keine ausreichenden Fortschritte erzielt.

Bei der Entwicklung von intelligenten Mikrosystemen werden insbesondere integrierte Schaltkreise in CMOS-Technologie (CMOS: Complementary Metal Oxide Semiconductor / Komplementärer Metalloxid-Halbleiter) eingesetzt. Dabei werden gleichzeitig p- und n-Kanal-MOSFETs (Metal Oxide Semiconductor Field Effect Transistors / Metalloxid-Halbleiter-Feldeffekttransistor) zur Herstellung integrierter Schaltkreise eingesetzt. Beim Einsatz der CMOS-Technologie müssen alle verwendeten Materialien und Prozesse CMOS-kompatibel sein, wobei dies insbesondere dann gilt, wenn ein CMOS-Prozess monolithisch auf einem Silizium-Chip durchgeführt werden soll. Allgemein sind für ein autonomes Mikrosystem wesentliche Aspekte, dass die verwendeten Speichermedien eine hohe Energiedichte aufweisen sollen, die verwendeten Komponenten umweltverträglich sein sollen und eine Energieversorgung miniaturisierbar sowie kostengünstig sein soll.

Zur Energieversorgung sind Batterien, Akkumulatoren und Mikro-Brennstoffzellen bekannt. Brennstoffzellensysteme sind als makroskopische Energiesysteme bereits etabliert. Mit fortschreitendem Miniaturisierungsgrad wird es technologisch jedoch zunehmend aufwendiger, bei mechanischen Bauteilem wie Ventilen und Druckreglern, welche aus beweglichen Teilen bestehen, Passungen und Führungen mit ausreichend guten Toleranzen zu fertigen. Deshalb beschränken sich bisherige Miniaturisierungsversuche von Brennstoffzellen vor allem auf die eigentliche Brennstoffzelle. In der Literatur gibt es allgemein mehrere Ansätze, PEM-Brennstoffzellen (PEM: Protone Exchange Membrane / protonenleitfähige Membran) in Silizium-Technologie herzustellen. Dabei werden zur Energieversorgung separate Wasserstoffspeiche bereitgestellt, insbesondere eingesetzt.

Einen Vorschlag zum Aufbau einer miniaturisierten Brennstoffzelle ist aus: Erdler G et al: "Chip integrated fuel cell" in Sensors and Actuators A, Elsevier Sequoia S.A., Lausanne, Ch, Bd. 132, Nr. 1, 8. November 2006 (2006-11-08), Seiten 331-336, XP025081953, ISSN: 0924-4247 bekannt. Bei einer Ausführungsform wird, ausgehend von einer Kavität in einem Silizium-Substrat unter dem Palladium Speicher eine Goldschicht zum anodenseitigen Anschluss des Speichers aufgebracht.

Bekannt sind außerdem Direkt-Methanol-Brennstoffzellen, welche als passive Systeme aufgebaut sind, wobei das Oxidationsmittel Methanol aus einem Vorratstank über Kapillarkräfte der Anode der Brennstoffzelle zugeführt wird. Die bei der Umsetzung des Methanols entstehenden CO2-Gasblasen werden ebenfalls über Kapillarkräfte abgeführt.

Die Aufgabe der Erfindung besteht darin, eine alternative Brennstoffzelle bzw. ein Verfahren zur deren Herstellung vorzuschlagen, wobei eine Miniaturisierung inklusive einem Wasserstoffspeicher ermöglicht werden soll. Insbesondere soll eine monolithische Umsetzung in Verbindung mit CMOS-Technologie ermöglicht werden.

Diese Aufgabe wird gelöst durch die Brennstoffzelle mit den Merkmalen gemäß Patentanspruch 1 Außerdem vorteilhaft ist eine monolithische Anordnung in CMOS-Technologie mit einer integrierten derartigen Brennstoffzelle. Vorteilhafte Ausgestaltungen sind Gegenstand abhängiger Ansprüche.

Bevorzugt wird demgemäß eine Brennstoffzelle mit einem Speicher zum Speichern von Wasserstoff, einer protonenleitfähigen Schicht, welche eine Oberfläche des Speichers überdeckt, und einer Kathode an einer dem Speicher gegenüberliegenden Seite der protonenleitfähigen Schicht, wobei der Speicher direkt an eine Anode angekoppelt ist, der Speicher selber eine Anode ausbildet und der Speicher in einer Kavität oder Grube innerhalb eines Substrats aus Silizium eingebettet ist.

Der Speicher ist mit dem Substrat zumindest über eine Stress-Kompensationsschicht verbunden. Die Stress-Kompensationsschicht ist vorteilhaft aus einem duktilen Material ausgebildet, insbesondere aus Zinn, Gold, Silber, Blei, Kadmium oder Indium. Zinn wird wegen der Umweltverträglichkeit besonders bevorzugt.

Bevorzugt wird eine Brennstoffzelle, bei welcher die Stress-Kompensationsschicht in allen Bereichen einer direkten Nachbarschaft des Substrats und des Speichers für den Wasserstoff ausgebildet ist. Mit anderen Worten ist die Stress-Kompensationsschicht zu allen Seiten hin um den Speicher herum ausgebildet, zu denen das Substrat direkt oder über weitere zwischengeschaltete Schichten zum Speicher benachbart angeordnet ist. Im Fall einer Wannenstruktur im Substrat, in welcher der Speicher aufgenommen ist, erstreckt sich die Stress-Kompensationsschicht entsprechend über die Wandungsbereiche innerhalb der Wanne zwischen dem Speicher und dem Substrat.

Bevorzugt wird eine Brennstoffzelle, bei welcher eine Diffusionsbarriere zwischen dem Speicher und dem Substrat derart ausgebildet ist, dass Wasserstoff reduziert oder vorzugsweise gar nicht vom Speicher zum Substrat hin austreten kann. Die Diffusionsbarriere kann dazu insbesondere aus Siliziumnitrid und/oder Siliziumoxid und/oder einer Oxynitridschicht ausgebildet sein.

Bevorzugt wird eine Brennstoffzelle, bei welcher die Diffusionsbarriere in allen Bereichen einer direkten Nachbarschaft des Substrats und des Speichers zum Aufnehmen des Wasserstoffs und gegebenenfalls anderen Schichten ausgebildet ist. Entsprechend ist der Speicher vorzugsweise zusätzlich auch von einer Diffusionsbarriere umgeben, welche einen Durchtritt von Wasserstoff aus dem Speicher zum Substrat hemmt oder vorzugsweise unterbindet.

Bevorzugt wird eine Brennstoffzelle, bei welcher der Speicher in einem Teil seines Umfangsbereichs von einer protonenleitfähigen und wasserstoff-nichtleitfähigen Schicht und in den übrigen Bereichen seines Umfangs von einer Diffusionsbarriere für Wasserstoff vollständig umgeben ist. Eine solche Anordnung stellt sicher, dass Wasserstoff nicht mit der Zeit aus dem Wasserstoffspeicher herausdiffundieren kann.

Bevorzugt wird eine Brennstoffzelle, bei welcher an einer Seite der protonenleitfähigen Schicht der Speicher anliegt und bei welcher auf der dazu gegenüberliegenden Seite eine selbstatmende Luftdiffusionsschicht als die Kathode ausgebildet ist, wobei die selbstatmende Luftdiffusionsschicht ausreichend porös für Luftdurchtritt, insbesondere für Sauerstoffdurchtritt ist.

Bevorzugt wird außerdem ein Verfahren zum Herstellen einer Brennstoffzelle, bei welchem in einem Substrat, vorzugsweise aus Silizium, eine Kavität oder Grube ausgebildet wird, in der Kavität eine Stress-Kompensationsschicht aus einem duktilen Material, insbesondere Zinn, und eine Diffusionsbarriere zum Hemmen oder Sperren des Durchtritts von Wasserstoff ausgebildet wird, die verbleibende Kavität mit einem Speicher bevorzugt aus Palladium gefüllt wird, die Struktur aus der Diffusionsbarriere, der Stress-Kompensationsschicht und dem Speicher mit einer protonen-leitfähigen und wasserstoff-nichtleitfähigen Schicht, insbesondere einer Polymer-Elektrolytmembran, an einer verbleibenden freien Oberfläche abgedeckt wird und auf der gegenüberliegenden Seite der protonenleitfähigen Schicht eine Kathode ausgebildet wird, wobei die Kathode Luft und/oder Sauerstoff hindurch treten lässt.

Eine solche Brennstoffzelle ist überraschend einfach herstellbar und bietet eine Vielzahl von Vorteilen. So kann auf einfache Art und Weise die Masse des der Brennstoffzelle zugeführten Wasserstoffs über die Materialeigenschaften der Oberfläche des Wasserstoffspeichers sowie über die Kontaktfläche zwischen Wasserstoffspeicher und Brennstoffzelle gesteuert werden. Der Wasserstoff gelangt vorteilhaft direkt über Diffusion aus dem Wasserstoffspeicher zur MEA (MEA: Membran-Elektrode-Einheit) Die Realisierung als selbstatmendes System, das heißt die Verwendung von Luftsauerstoff aus der direkten Umgebung, ermöglicht, das Brennstoffzellensystem vollständig ohne aktive Komponenten wie Leitungssystemen und Ventilen aufzubauen.

Eine derartige Brennstoffzelle inklusive dem Speicher für den Wasserstoff eignet sich aufgrund des sehr einfachen Aufbaus besonders gut zur Miniaturisierung. Wird die Brennstoffzelle aus CMOS-kompatiblen Materialien aufgebaut, kann die Brennstoffzelle inklusive dem Speicher für den Wasserstoff monolithisch auf Chip-Ebene integriert werden.

Vorteilhaft an einem solchen Brennstoffzellen-Aufbau gegenüber anderen elektrischen Energiequellen, beispielsweise Akkumulatoren, ist, dass die Kapazität und die Leistung getrennt voneinander eingestellt werden können. Die Kapazität der neu aufgebauten Brennstoffzelle wird bei fester Fläche bzw. festem Volumen über die Schichtdicke des integrierten Wasserstoffspeichers eingestellt. Die Leistung ergibt sich aus der Kontaktfläche zwischen dem integrierten Wasserstoffspeicher und der Polymer-Elektrolytmembran.

Ein Ausführungsbeispiel wird nachfolgend anhand der Zeichnung näher erläutert. Es zeigen:
- Fig. 1: schematisch eine Seitenansicht einer geschnittenen Brennstoffzelle sowie in einzelnen der Brennstoffzellenbereiche Reaktionsformeln zur Veranschaulichung des Ablaufs,
- Fig. 2: die Brennstoffzelle gemäß Fig. 1 in Schnittdarstellung und
- Fig. 3: Verfahrensschritte zur Herstellung einer solchen Brennstoffzelle.

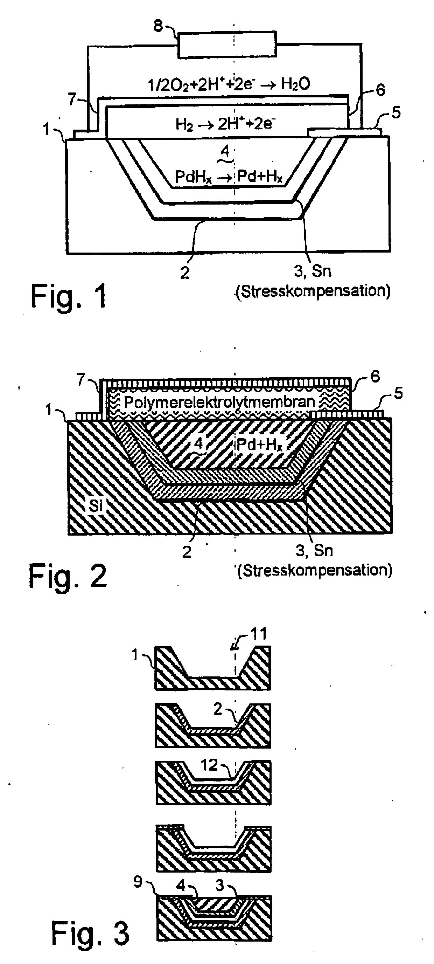

Fig. 1 und 2 zeigen in verschiedenen Darstellungsarten einen Schnitt durch eine Halbleiteranordnung mit einer integrierten Brennstoffzelle. Eine verbesserte Miniaturisierung wird dadurch erreicht, dass ein Brennstoffzellensystem direkt auf oder in einem Silizium-Chip integriert ist. Bisher getrennte Komponenten sind dabei zu neuen Funktionseinheiten zusammengefasst. Insbesondere ist dabei ein Wasserstoffspeicher direkt in den Brennstoffzellenaufbau integriert. Der Wasserstoffspeicher wird direkt an eine Anode der Brennstoffzelle angekoppelt.

In einem Substrat 1 aus Silizium ist eine Grube ausgebildet, welche mit verschiedenen Schichten und Materialien gefüllt ist. Direkt dem Substrat 1 benachbart befindet sich eine Diffusionsbarriere 2, welche einen Durchtritt von Wasserstoff reduzieren oder verhindern soll. Durch das Substrat 1 folgt jenseits der Diffusionsbarriere 2 eine Stress-Kompensationsschicht 3 aus insbesondere Zinn. Der Stress-Kompensationsschicht 3 folgt ein Speicher 4 als Wasserstoffspeicher, welcher zugleich eine Anode ausbildet. Als Material für den Speicher 4 wird Palladium bevorzugt verwendet. Vorzugsweise ist die Anordnung der Diffusionsbarriere 2 und der Stress-Kompensationsschicht 3 so gewählt, dass diese wannenförmig in der Grube angeordnet sind und mit ihren oberen außenseitigen Rändern auf gleicher Höhe abschließen, wie eine Oberfläche des außenseitig dazu benachbarten Substrats 1. Auch der Speicher 4 weist eine Oberfläche auf, welche vorzugsweise plan mit den Oberflächen des Substrats 1, der Diffusionsbarriere 2 und der Stress-Kompensationsschicht 3 abschließt. In Richtung des Substrats 1 ist der Speicher 4 dadurch vollständig von erst der Stress-Kompensationsschicht 3 und dann der Diffusionsbarriere 2 umgeben.

Beim Beladen des Speichers 4 mit Wasserstoff bzw. beim Entladen des Speichers 4 erfährt dieser eine Ausdehnung bzw. Schrumpfung um bis zu ca. 12%. Die Stress-Kompensationsschicht 3 besteht aus einem Material und einer Dimensionierung, welche die Ausdehnung bzw. das Zusammenziehen des Speichers 4 derart kompensieren, dass eine Ablösung der Anordnung vom Substrat 1 und/oder eine Rissbildung im Substrat 1 verhindert wird. Gemäß erster Versuche hat sich beispielsweise eine Stress-Kompensationsschicht 3 mit einer Schichtdicke von 70 µm bei einer Schichtdicke von 130 µm für den Speicher 4 als geeignet gezeigt.

Oberhalb dieser Anordnung befindet sich ein Anodenkontakt 5, welcher zum elektrischen Kontaktieren der durch den Speicher 4 ausgebildeten Anode von einem oberseitigen Randbereich des Speichers 4 über die oberseitigen Randabschnitte der Stress-Kompensationsschicht 3 und der Diffusionsbarriere 2 auf die Oberfläche des Substrats 1 ragt, um einen elektrischen Anschluss der Anode zu ermöglichen. Außerdem ist die Oberfläche der gesamten Anordnung aus dem Speicher 4 und den oberseitigen bzw. außenseitigen Randabschnitten der diesen umgebenden Stress-Kompensationsschicht 3 und Diffusionsbarriere 2 mit einer Membran 6 überdeckt, welche als eine Polymer-Elektrolytmembran bzw. protonenleitfähige Schicht ausgebildet ist. Die Membran 6 ist vorzugsweise vollständig auf der dieser Anordnung gegenüberliegenden und somit außenseitigen Seite der Membran 6 von einer Kathode 7 als einem zweiten elektrischen Anschlusskontakt überdeckt. Die Kathode 7 ragt vorzugsweise an zumindest einem Umfangsrandabschnitt seitlich der Membran 6 bis auf das Substrat 1 und führt ein Stück parallel über die Oberfläche des Substrats 1, um einen Anschlusskontaktpunkt auszubilden. Ein elektrischer Verbraucher 8 kann somit an die Kathode 7 und an den Anodenkontakt 5 angeschlossen werden, um mit elektrischer Leistung versorgt zu werden.

Im Fall der besonders bevorzugten Anordnung handelt es sich bei dem Speicher 4 um einen Wasserstoffspeicher aus Palladium Pd, welcher mit Wasserstoff angefüllt ist. Beim Anschließen einer elektrischen Last, wie dem Verbraucher 8, wird in dem Speicher 4 entsprechend PdHₓ umgesetzt zu Pd+Hₓ. In der Membran 6 erfolgt ein Übergang von Wasserstoff zu Protonen und Elektronen. Durch Reaktion mit Luftsauerstoff, welcher außenseitig über die Kathode 7 zugeführt wird, entsteht an der Kathode 7 Wasser H₂O durch die Reaktion 1/2O₂ + 2H⁺ + 2e⁻.

Bei einer solchen Anordnung ist der Speicher 4 auf Palladium-Basis direkt auf dem Substrat 1 auf Silizium-Basis aufgebracht und fest damit verbunden. Der Wasserstoffspeicher ist somit direkt auf einem Chip integrierbar. Um eine Langzeitstabilität der Wasserstoffspeicherung im Palladium des Speichers 4 sicherzustellen, sind alle Flächen, welche keinen Kontakt zu der Brennstoffzelle, das heißt der Membran 6, aufweisen, mit der Diffusionsbarriere 2 über der Umgebung abgeschirmt, um eine Wasserstoffdiffusion zu unterdrücken oder zu verhindern.

Um einen Wasserstoffaustritt im Bereich der Oberseite zu verhindern, überdeckt die Membran 6 die gesamte Oberfläche sowohl des Speichers 4 als auch der weiteren im Oberflächenbereich angrenzenden Komponenten bzw. Schichten bis hin zu der Diffusionsbarriere 2. Die Membran 6 ist dabei vorzugsweise für Wasserstoff gasdicht und vollflächig an den Speicher 4 angekoppelt.

Vorzugsweise kann eine solche Diffusionsbarriere 2, welche als Wasserstoff-Diffusionsbarriereschicht dienen soll, durch Siliziumnitridschichten oder Oxynitridschichten mittels CVD (Chemical Vapour Deposition / Chemische Gasphasenabscheidung) abgeschieden werden. Eine gute Haftung zum Substrat 1 aus Silizium wurde bei ersten Versuchen durch eine Kombination von Polysilizium und Palladium mit anschließender Palladium-Silizidbildung erreicht.

Bei der dargestellten Ausführungsform ist zwischen die Diffusionsbarriere 2 und den Speicher 4 zusätzlich die Stress-Kompensationsschicht 3 gelegt, entstehende Spannungen aufgrund einer Volumenvergrößerung des Speichers 4 aus Palladium bei Beladung mit Wasserstoff zu kompensieren oder zumindest ausreichend zu reduzieren. Dadurch werden CMOS-kompatible Lösungen bei der Fertigung ermöglicht. Die bei der Wasserstoffbeladung und Wasserstoffentladung des integrierten Speichers 4 entstehenden mechanischen Spannungen an der Grenzfläche zum Substrat 1 aus Silizium werden durch eine vorzugsweise galvanisch abgeschiedene Zinnschicht kompensiert, welche die Stress-Kompensationsschicht 3 ausbildet.

Alternativ können die Stress-Kompensationsschicht 3 und die Diffusionsbarriere 2 jedoch auch in umgekehrter Reihenfolge zwischen dem Substrat 1 und dem Speicher 4 ausgebildet bzw. angeordnet werden.

Bei einer solchen Anordnung diffundiert nach dem Anschließen einer Last wie dem Verbraucher 8 der im Palladium des Speichers 4 gespeicherte Wasserstoff in atomarer Form an die Grenzfläche zwischen der angekoppelten Membran 6 und dem Speicher 4. Aufgrund der katalytischen Wirkung von Palladium disoziiert der Wasserstoff in ein Proton und ein Elektron. Die Protonen durchwandern die Polymer-Elektrolytmembran, während die Elektronen über den zu betreibenden Verbraucher 8 zur Kathode 7 der Brennstoffzelle gelangen. An der Kathode 7 reagieren die Protonen mit den Elektronen und dem Luftsauerstoff aus der Umgebung zu Wasser.

Die Stress-Kompensationsschicht 3 soll ein möglichst kleines E-Modul aufweisen, um die mechanischen Spannungen zum Substrat 1 zu reduzieren. Zur Kompensation der mechanischen Spannungen des Palladiumspeichers wird daher für die Stress-Kompensationsschicht 3 ein möglichst duktiles und reversibel verformbares Material gewählt. Außerdem soll das Material der Stress-Kompensationsschicht 3 eine gute Haftfestigkeit sowohl zum Speicher 4 aus Palladium als auch zum Substrat 1 aus Silizium bzw. zu den auf dem Substrat 1 aufgebrachten Dünnschichten, welche üblicherweise zwischengeschaltet sind, aufweisen. Außerdem werden vorzugsweise Materialien verwendet, welche mit halbleitertechnologischen oder kompatiblen Verfahren abscheidbar sind oder im Falle höherer Schichtdicken mittels Dickschichtprozessen wie beispielsweise Galvanik, Siebdruck oder Castingprozessen herstellbar sind. Vorzugsweise sollen die verwendeten Materialien zum Ausbilden der Stress-Kompensationsschicht 3 außerdem umweltverträglich sein. Diese Bedingungen werden durch duktile Materialien wie insbesondere Gold, Silber, Blei, Kadmium, Indium oder Zinn erfüllt. Mit Blick auf Umweltverträglichkeit und eine kostengünstige Herstellung wird Zinn besonders bevorzugt. Dadurch wird ein Brennstoffzellensystem bereitgestellt, welches im Wesentlichen aus Silizium, Palladium, einer Polymer-Elektrolytmembran mit Palladium-Stromkollektor und Zinn ausgebildet ist. Bei dieser Materialwahl handelt es sich vorteilhafterweise um die Umwelt nichtschädigende Stoffe.

Fig. 3 zeigt von oben nach unten eine Abfolge von Herstellungsschritten bei der Herstellung einer derartigen Brennstoffzelle. In einem ersten Verfahrensschritt wird in dem Substrat 1 eine Grube 11 ausgebildet, was beispielsweise durch nass-chemisches Ätzen mit KOH⁻ oder Trockenätzen durchgeführt werden kann. Übliche Herstellungsschritte sind dabei ein Maskieren der Siliziumoberfläche, ein Öffnen der Maskierung in dem gewünschten Bereich, in welchem der Speicher 4 ausgebildet werden soll, eine Herstellung der Kavität der Grube 11 und ein Entfernen der verwendeten Maskierschichten.

In einem nächsten Verfahrensschritt wird die Diffusionsbarriere 2, das heißt die Barriere für Wasserstoff, an den Wänden der Grube 11 ausgebildet. Dies kann insbesondere durch das Herstellen einer Oxidschicht aus SiO und der nachfolgenden Herstellung der eigentlichen Nitridschicht mit CVD zu Si₃N₄ erfolgen.

Nachfolgend werden vorzugsweise eine Haftvermittlerschicht, vorzugsweise aus Polysilizium, welche vorzugsweise über CVD-Prozesse hergestellt wird und eine Galvanikstartschicht, vorzugsweise aus Palladium, welche vorzugsweise mittels PVD-Verfahren (PVD: Physical Vapour Deposition / Physikalisches Aufdampfen) aufgebracht wird, abgeschieden. Durch Tempern erfolgt die eigentliche Pd-Silizid-Bildung. Poly-Silizium dient gemäß Standard-CMOS-Verfahren als Haftschicht für Palladium. Palladium wird an der Grenze zum Palladium-Silizid gebildet, weil darunter Poly-Silizium ist. Das Poly-Silizium bildet somit eine Haftvermittlerschicht 12 aus. In erster Linie dient dies zur Kontaktierung, wobei vor allem auch eine Verstärkung mit Aluminium möglich ist.

In einem weiteren dargestellten Verfahrensschritt wird die eigentliche Stress-Kompensationsschicht 3 in der Grube 11 auf dem in dieser befindlichen Schichtaufbau ausgebildet. Nach einer Maskierung der Silizium-Oberfläche des Substrats 1 mittels üblicher Lithografie-Prozesse wird die eigentliche Stress-Kompensationsschicht 3 aus Zinn Sn mittels eines Galvanikverfahrens aufgetragen.

Nach dem Herstellen der Stress-Kompensationsschicht 3 wird der eigentliche Speicher 4 aus Palladium Pd mittels eines üblichen Pd-Galvanikverfahrens in der verbleibenden Grube 11 ausgebildet. Abschließend erfolgt ein Planarisieren der Oberfläche mittels einer Poliermaschine, um eine einheitliche Oberfläche über das Substrat 1, den Speicher 4 und die zwischen diesen an die Oberfläche ragenden Ränder der Stress-Kompensationsschicht 3 und der Diffusionsbarriere 2 zu erlangen. Letztendlich erfolgt ein Kontaktieren des Speichers 4 durch beispielsweise eine entsprechende Maskierung der Oberfläche mittels eines Lithografie-Verfahrens, die Herstellung einer Goldschicht zum Ausbilden der Kontakte mittels beispielsweise PVD durch Aufdampfen und letztendlich eine Strukturierung von Goldleiterbahnen aus der Goldschicht 9.

Nachdem das Palladium als Anode bzw. Speicher 4 in die Grube 11 eingefüllt ist, bzw. vor dem Aufbringen der Membran 6 wird der Speicher 4 mit Wasserstoff gefüllt. Dabei diffundiert Wasserstoff in das Palladium ein. Nachfolgend wird die protonenleitfähige Membran 6 als Abdeckung aufgebracht, welche einerseits keinen Wasserstoff hindurch lässt, andererseits aber Protonen hindurch lässt. Das Strukturieren kann ebenfalls mittels üblicher Verfahrensschritte aus CMOS-Prozessen durchgeführt werden, beispielsweise unter Einsatz eines RIE-Prozesses (RIE: Reactive Ion Etching / reaktives Ionenätzen). Vorteilhaft ist der Einsatz von Hilfsschichten, die als Schutzfunktion für das Siliziumsubstrat dienen können. Eine Haftung der Polymerelektrolytmembran zum Palladiumspeicher wird vorzugsweise durch den Einsatz einer Haftvermittlersubstanz, welche der Polymerdispersion hinzugefügt wird, erreicht. Vorteilhafterweise liegt so bereits atomarer Wasserstoff im Palladium des Speichers 4 bzw. der Anode vor dem Abdecken mit der Membran 6 vor.

Nachfolgend werden die Polymer-Elektrolytmembran als die Membran 6 und die Kathode 7 auf der Oberfläche des Substrats 1 bzw. der in der Grube 11 eingebrachten Materialien ausgebildet. Um eine halbleiter-technologische Realisierung einer selbstatmenden Luftdiffusionsschicht auszubilden, wird diese bevorzugt aus einem Stromkollektor zur elektrischen Rückführung auf das Substrat 1 und einer feinen katalytisch aktiven Palladium-Lamellenstruktur auf der Membran 6 aufgebaut. Die Palladium-Lamellenstruktur bildet gleichzeitig die selbstatmende Luftdiffusionsschicht und die Kathode 7 der Brennstoffzelle aus. Zur Strukturierung des Palladium-Stromkollektors und der Palladium-Luftdiffusionselektrode können mikrostrukturierte Sputtermasken eingesetzt werden, welche mit einem Advanced Silicon Etching-Tiefenätzprozess aus beispielsweise 300 µm dicken Silizium-Wafern hergestellt werden. Bei ersten Versuchen betrug eine Stegweite der ausgebildeten Lamellenstruktur 100 µm. Ein derartiger mikro-strukturierter Palladium-Katalysator ist hochporös und damit für Luft durchlässig. Als geeignete elektrische Isolationsschicht zwischen der Anode und der Kathode wurde gemäß erster Versuche eine CVD-Siliziumnitridschicht verwendet.

## Patentansprüche

1. Brennstoffzelle, mit
- einem Speicher (4) zum Speichern von Wasserstoff (Hx),
- einer protonenleitfähigen Schicht, welche eine Oberfläche des Speichers (4) überdeckt, und 1
- einer Kathode (7) an einer dem Speicher (4) gegenüberliegenden Seite der protonenleltfähigen Schicht, wobei
- der Speicher (4) direkt an der Anode angekoppelt ist, der Speicher (4) selbst eine Anode ausbildet, und der wasserstoff-aufnahmefähige Speicher (4) eingebettet ist in einer Kavität oder Grube (11) innerhalb eines Substrats (1) aus Silizium,
**dadurch gekennzeichnet, dass**
zwischen einer zueinander benachbarten Oberfläche des Speichers (4) und des Substrats (1) eine Stress-Kompensationsschicht (3) ausgebildet ist, und
ein Anodenkontakt (5) ausgebildet ist, welcher von einem oberseitigen Randbereich des Speichers (4) über oberseitige Randabschnitte der Stress-Kompensationsschicht (3) auf die Oberfläche des Substrats (1) ragt.

2. Brennstoffzelle nach Anspruch 1, bei welcher die Kathode (7) an zumindest einem Umfangsrandabschnitt seitlich der protonenleitfähigen Schicht bis auf das Substrat (1) ragt.

3. Brennstoffzelle nach Anspruch 1 oder 2, bei welcher die Stress-Kompensationsschicht (3) aus einem duktilen Material, insbesondere Zinn, Gold, Silber, Blei, Kadmium, oder Indium ausgebildet ist.

4. Brennstoffzelle nach einem vorstehenden Anspruch, bei welche die Stress-Kompensationsschicht (3) in allen Bereichen in einer direkten Nachbarschaft des Substrats (1) und des Speichers (4) ausgebildet ist.

5. Brennstoffzelle nach einem vorstehenden Anspruch, bei welcher eine Diffusionsbarriere (2) zwischen dem Speicher (4) und dem Substrat (1) derart ausgebildet ist, dass Wasserstoff (H2) reduziert oder nicht vom Speicher (4) zum Substrat (1) austreten kann.

6. Brennstoffzelle nach Anspruch 5, bei welcher die Diffusionsbarriere (2) aus Siliziumnitrid und / oder Siliziumoxid und / oder einer Oxynitridschicht ausgebildet ist.

7. Brennstoffzelle nach Anspruch 5 oder 6, bei welcher die Diffusionsbarriere (2) in allen Bereichen einer direkten Nachbarschaft des Substrats (1) und des Speichers (4) zum Speichern des Wasserstoffs ausgebildet ist.

8. Brennstoffzelle nach einem vorstehenden Anspruch, bei welcher der Speicher (4) in einem Teil seines Umfangsbereichs von einer protonenleitfähigen und wasserstoff-nichtleitfähigen Schicht und in den übrigen Bereichen seines Umfangs von einer Diffusionsbarriere (2) für Wasserstoff vollständig umgeben ist.

9. Brennstoffzelle nach einem vorstehenden Anspruch, bei welcher an einer Seite der protonenleitfähigen Schicht der Speicher (4) anliegt und bei welcher auf der dazu gegenüberliegenden Seite eine selbstatmende Luftdiffusionsschicht als die Kathode (7) ausgebildet ist, wobei die seibstatmende Luftdiffusionsschicht ausreichend porös für Luftdurchtritt, insbesondere für Sauerstoffdurchtritt ist.

10. Brennstoffzelle nach einem vorstehenden Anspruch, wobei zwischen einer zueinander benachbarten Oberfläche des Speichers (4) und des Substrats (1) eine Diffusionsbarriere (2) für Wasserstoff ausgebildet ist.

11. Brennstoffzelle nach einem der Ansprüche 2 bis 10, wobei die Kathode (7) an dem Umfangsrandabschnitt seitlich der protonenleitfähigen Schicht bis auf der Oberfläche des Substrats (1) ragt und einen Anschlusskontaktpunkt ausbildet.

12. Monolithische Anordnung in CMOS-Technologie mit einer integrierten derartigen Brennstoffzelle nach einem der Ansprüche 1 bis 11.

## Claims

1. Fuel cell, comprising
- a store (4) for storing hydrogen (Hₓ),
- a proton-conductive layer, covering a surface of the store (4) and
- a cathode (7) at a side of the proton-conductive layer opposite the store (4), wherein
- the store (4) is directly coupled with the anode the store (4) itself forms an anode and the store (4), which is capable of accepting hydrogen, is embedded in a cavity or pit (11) within a substrate (1) of silicon,
**characterised in that**
a stress-compensating layer (3) is formed between mutually adjacent surfaces of the store (4) and the substrate (1) and
an anode contact (5) is constructed and projects from an upper-side edge region of the store (4) beyond upper-side edge sections of the stress-compensating layer (3) on the surface of the substrate (1).

2. Fuel cell according to claim 1, in which the cathode (7) projects at at least one circumferential edge section laterally of the proton-conductive layer as far as on the substrate (1).

3. Fuel cell according to claim 1 or 2, in which the stress-compensating layer (3) is formed from a ductile material, particularly tin, gold, silver, lead, cadmium or indium.

4. Fuel cell according to any one of the preceding claims, in which the stress-compensating layer (3) is formed in all regions in a direct vicinity of the substrate (1) and the store (4).

5. Fuel cell according to any one of the preceding claims, in which a diffusion barrier (2) is formed between the store (4) and the substrate (1) in such a manner that hydrogen (H2) reduces or cannot escape from the store (4) to the substrate (1).

6. Fuel cell according to claim 5, in which the diffusion barrier (2) is formed from silicon nitride and/or silicon oxide and/or an oxynitride layer.

7. Fuel cell according to claim 5 or 6, in which the diffusion barrier (2) is formed in all regions of a direct vicinity of the substrate (1) and the store (4) for storage of the hydrogen.

8. Fuel cell according to any one of the preceding claims, in which the store (4) is completely surrounded in a part of its circumferential region by a proton-conductive and hydrogen-non-conductive layer and in the remaining regions of its circumference by a diffusion barrier (2) for hydrogen.

9. Fuel cell according to any one of the preceding claims, in which the store (4) lies at one side of the proton-conductive layer and in which a self-respiratory air diffusion layer has the cathode (7) is formed on the side opposite thereto, wherein the self-respiratory air diffusion layer is sufficiently porous for the passage of air, particularly for passage of oxygen.

10. Fuel cell according to any one of the preceding claims, wherein a diffusion barrier (2) for the hydrogen is formed between mutually adjacent surfaces of the store (4) and the substrate (1).

11. Fuel cell according to any one of claims 2 to 10, wherein the cathode (7) projects at the circumferential edge region laterally of the proton-conductive layer as far as on the surface of the substrate (1) and forms a connecting contact point.

12. Monolithic arrangement in CMOS technology with an integrated fuel cell of that kind according to any one of claims 1 to 11.

## Revendications

1. Pile à combustible comprenant
. un réservoir (4) pour stocker de l'hydrogène (Hₓ)
. une couche conductrice de protons qui couvre la surface supérieure du réservoir (4) et,
. une cathode (7) sur un côté opposé du réservoir à celui de la couche conductrice de protons dans laquelle
. le réservoir (4) est couplé directement à l'anode, le réservoir (4) formant lui-même une anode et le réservoir (4) servant de récepteur à l'hydrogène est noyé dans une cavité ou fosse (11) dans un substrat (1) de silicium
**caractérisée en ce que**
une couche compensatrice de contrainte (3) est prévue entre le substrat (1) et une surface supérieure adjacente du réservoir (4) et, un contact anodique (5) est prévu qui fait saillie à partir de la zone de bordure supérieure du réservoir (4) au-dessus de la portion supérieure de bordure de la couche compensatrice de contrainte (3) sur la surface supérieure du substrat (1).

2. Pile à combustible selon la revendication 1 **caractérisée en ce que** la cathode (7) fait saillie au moins d'une partie de la bordure périphérique latéralement à la couche conductrice de protons jusqu'au substrat (1).

3. Pile à combustible selon la revendication 1 ou 2 **caractérisée en ce que** la couche compensatrice de contrainte est réalisée en une matière ductile en particulier du zinc, de l'or, de l'argent, du plomb, du cadmium, ou de l'indium.

4. Pile à combustible selon l'une des revendications précédentes **caractérisée en ce que** la couche compensatrice de contrainte (3) est réalisée sur toutes les zones qui sont au voisinage directe du substrat (1) et du réservoir (4).

5. Pile à combustible selon l'une des revendications précédentes **caractérisée en ce qu'**elle comporte une barrière de diffusion (2) entre le réservoir (4) et le substrat (1) du type qui réduit ou empêche la sortie de l'hydrogène (H₂) du réservoir (4) vers le substrat (1).

6. Pile à combustible selon la revendication 5 **caractérisée en ce que** la barrière de diffusion (2) est réalisée sous la forme d'une couche de nitrure de silicium et/ou d'oxyde de silicium et/ou d'oxynitrure.

7. Pile à combustible selon la revendication 5 ou 6 **caractérisée en ce que** la barrière de diffusion (2) est présente sur toutes les zones en voisinage direct du substrat (1) et du réservoir (4) pour le stockage de l'hydrogène.

8. Pile à combustible selon l'une des revendications précédentes **caractérisée en ce que** le réservoir est entouré entièrement sur une partie de sa zone périphérique par une couche conductrice de protons et non conductrice à l'hydrogène et sur les autres parties restantes de sa surface périphérique par une barrière de diffusion (2) pour l'hydrogène.

9. Pile à combustible selon l'une des revendications précédentes **caractérisée en ce que** le réservoir (4) adhère sur un des côtés de la couche conductrice de protons et **en ce que** sur le côté opposé de celle-ci est prévue en tant que cathode (7) une couche autorespirante de diffusion à l'air suffisamment poreuse pour le passage de l'air en particulier pour le passage de l'oxygène.

10. Pile à combustible selon l'une des revendications précédentes **caractérisée en ce qu'**entre les surfaces supérieures du réservoir (4) et du substrat (1) voisines les unes des autres, est prévue une barrière de diffusion (2) pour l'hydrogène.

11. Pile à combustible selon l'une des revendications 2 à 10 **caractérisée en ce que** la cathode (7) sur la bordure périphérique et latéralement à la couche conductrice de protons fait saillie jusqu'à la surface supérieure du substrat (1) et forme un point de contact de connexion.

12. Ensemble monolithique en technologie CMOS avec une pile à combustible du type intégré selon l'une des revendications 1 à 11.
